# EUROPEAN PATENT APPLICATION

(11) **EP 2 924 678 A1**
(43) Date of publication of application: **30.09.2015**
(21) Application number: 15157326.8
(22) Date of filing: 03.03.2015
(51) Int. Cl.: G09F 3/20, G06Q 30/06, G06Q 30/02, G09F 9/35, G09F 9/37, G09F 13/18, G09F 9/33

(54) **Electronic information label tag and electronic information label management system including the same**

(30) Priority: 28.03.2014 KR 20140036899; 10.09.2014 KR 20140119618
(71) Applicant: Samsung Electro-Mechanics Co., Ltd., Gyeonggi-do (KR)
(72) Inventor: Kim, Wan Soo, Gyeonggi-do (KR); Ryu, Jong Gi, Gyeonggi-do (KR); Jung, Keun Hwa, Gyeonggi-do (KR); Kang, Yeon Hee, Gyeonggi-do (KR); Lee, Ha Na, Gyeonggi-do (KR)
(74) Representative: Grünecker Patent- und Rechtsanwälte PartG mbB

(57) **Abstract**

An electronic information label tag (100) and an electronic information label management system (1000) including the same are provided. The electronic information label tag (100) includes a display unit (110), a case (120), a light emitting unit (130), and a driving unit (140). The display unit (110) displays merchandise information. The case (120) accommodates the display unit (110) while exposing a screen (111) of the display unit (110) to an outside. The light emitting unit (130) emits light from a side portion of the case (120) to the outside. The driving unit (140) is accommodated within the case (120) and drives the display unit (110) and the light emitting unit (130).

## Description

### CROSS-REFERENCE TO RELATED APPLICATION(S)

This application claims priority from Korean Patent Application Nos. 10-2014-0036899, filed on March 28, 2014, and 10-2014-0119618, filed on September 10, 2014, in the Korean Intellectual Property Office, the disclosures of which are incorporated herein by reference in its entirety.

### BACKGROUND

### 1. Field

The following description relates to an electronic information label tag and an electronic information label management system capable of facilitating product purchase and sales management by displaying merchandise information, such as product price.

### 2. Description of the Related Art

Paper labels are generally used in retail stores, such as discount stores, retailers, and the like, in order to provide merchandise information, such as product price. As environmental issues have recently emerged, the environmental degradation problems caused by the use of paper labels have been raised. In addition, paper label production and management costs continue to occur, damage to paper labels results in various ways, and lack of timely updates of product information causes conflict in stores.

An electronic information label (EIL) management system refers to a system that displays merchandise information, such as a product price, using an electronic information label tag associated with a management server. The EIL management system may contribute to the reduction of labor and expendables.

On the other hand, purchase promotion that stimulates customers' desire to buy merchandise is important for sales growth of stores. Moreover, the electronic information label used in a low-temperature or humid environment, such as a frozen section and a fresh section, may experience corrosion or contamination and a countermeasure against such problems may need to be taken.

### SUMMARY

In one general aspect, an electronic information label tag emits light from a side portion of a case to the outside. A driving unit is accommodated within the case and drives a display unit and a light emitting unit. The electronic information label tag that emits light along the edge of the side portion may attract customers' attention and be easy to recognize.

In another general aspect, the electronic information label tag may include a case including a front case and a rear case which are coupled to each other, wherein a light transmitting member made of a sealing material is formed on a coupled area along an edge of the case while an end thereof is exposed along the edge, and the light may be emitted along the exposed end of the light transmitting member.

In another general aspect, light emission of the electronic information label tag may be controlled according to merchandise information transmitted from a management server.

In another general aspect, the electronic information label tag may vary a color of emitted light according to the merchandise information transmitted from the management server.

In yet another general aspect, on/off display function of the electronic information label tag may be controlled according to the merchandise information transmitted from the management server.

Other features and aspects will be apparent from the following detailed description, the drawings, and the claims.

### BRIEF DESCRIPTION OF THE DRAWINGS

FIG. 1 is a perspective view illustrating an exemplary embodiment of an electronic information label tag.
FIG. 2 is a cross-sectional view thereof taken along line A-A of FIG. 1.
FIG. 3 is a diagram illustrating an interior of the electronic information label tag of FIG. 2.
FIG. 4 is a diagram illustrating an interior of an electronic information label tag to which another example of a light emitting unit is applied.
FIG. 5 is a diagram illustrating an interior of an electronic information label tag to which another example of a light emitting unit is applied.
FIG. 6 is a diagram illustrating a configuration of an electronic information label management system according to an exemplary embodiment.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The following description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

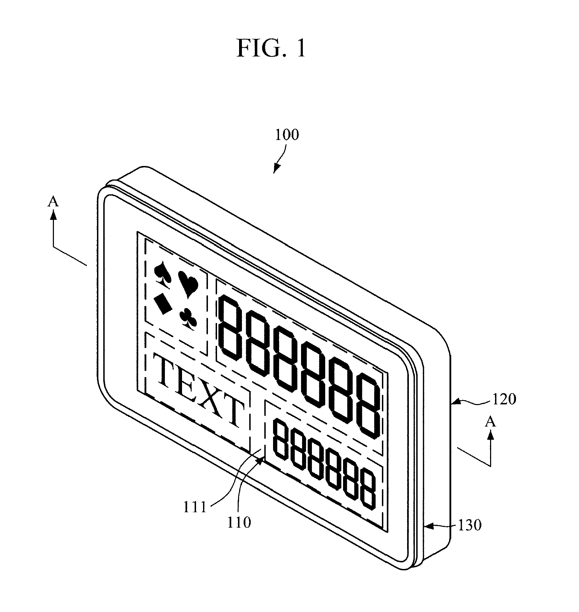

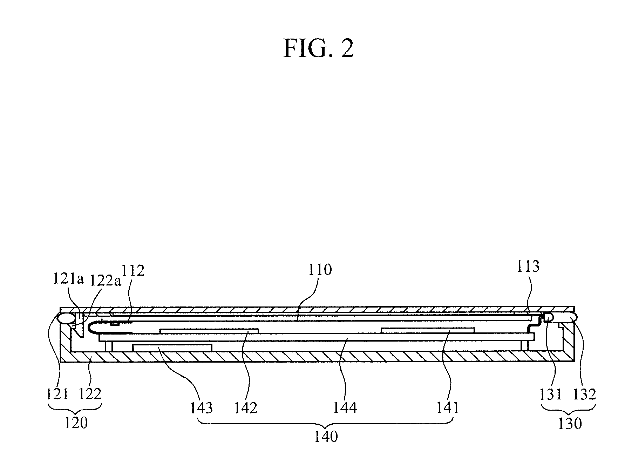

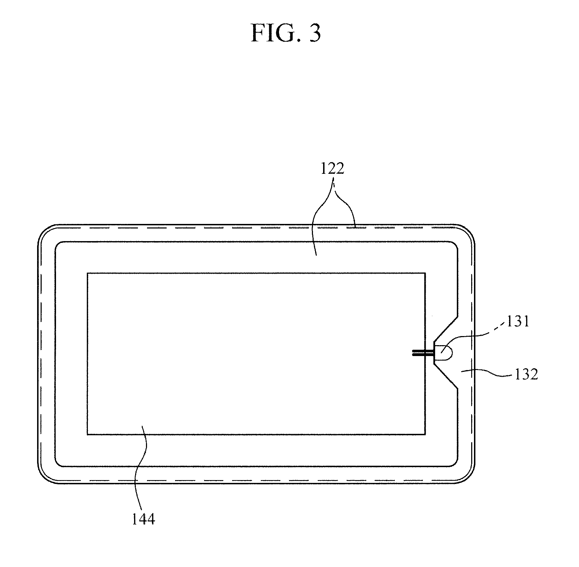

FIG. 1 is a perspective view illustrating an exemplary embodiment of an electronic information label tag. FIG. 2 is a cross-sectional view thereof taken along line A-A of FIG. 1. FIG. 3 is a diagram illustrating an interior of the electronic information label tag of FIG. 2.

Referring to FIGS. 1 to 3, an electronic information label tag 100 includes a display unit 110, a case 120, a light emitting unit 130, and a driving unit 140.

The display unit 110 displays merchandise information on a screen 111. The screen 111 is formed by pixels that represent an image. The merchandise information may relate to a product name, a product price, and so forth. The product price may relate to a price per unit, a normal price, and a sale price. The display unit 110 may display additional information, such as an indication of a location of display of a product, purchase points information, the number of products to be displayed, and the like, as well as the merchandise information, thereby facilitating product purchase and sales management. A bezel area may be formed around the screen 111. A circuitry or a flexible substrate 112 to drive the pixels of the screen 111 may be connected to the bezel area. A bezel unit 113 may be disposed on the bezel area. The bezel unit 113 may conceal the bezel area so as not to be seen from the outside.

For example, the display unit 110 may be formed of electronic paper. The electronic paper has superior energy efficiency since it can be driven with a small amount of energy without requiring background lighting or sustained recharge. In addition, with bright clear image quality and wide viewing angle with good readability, the electronic paper may be suitable for displaying merchandise information.

The electronic paper may be an electrophoretic display (EPD) or the like. The EPD is the application of a technology that represents colors, letters, pictures, and the like, using fine nanoparticles that move toward the positive electrode or the negative electrode according to current flow. The aspects of the present disclosure are not limited thereto, such that the display unit 110 may be, for example, a liquid crystal display (LCD). The display unit 110 may be connected to a printed circuit board 144 of the driving unit 140 via the flexible substrate 112. The flexible substrate 112 may be equipped with a driving chip to drive the display unit 110.

The case 120 accommodates the display unit 110 with a screen 111 of the display unit 110 exposed to the outside. The case 120 has a transparent portion that corresponds to at least the screen 111 of the display unit 110.

The light emitting unit 130 emits light to the outside from the side portion of the case 120. The light emitted to the outside from the side portion of the case 120 may help the electronic information label tag 100 to draw the customers' attention and be identified, thereby increasing the probability of the customers recognizing the merchandise information displayed on the screen 111 of the display unit 110.

Therefore, purchase of the product may be naturally encouraged, which can elicit customers' desire to buy the product and thereby help to increase the sales growth of the store. In addition, when applied to products displayed in a special section, the electronic information label tag 100 may serve a special focal-point lighting suitable for products in the special section.

In one general aspect, the light emitting unit 130 may include a light source 131 and a light transmitting member 132. The light source 131 is mounted within the case 120, and controlled by the driving unit 140 to generate light. The light source 131 may include a light emission element. The light emission element is electrically connected to a tag controller 142 of the driving unit 140 to be controlled to turn on or off.

The light emitting unit 130 may be configured to emit red-colored light with a relatively high attractiveness. To this end, the light source 131 may include a red light emission element to generate red light. The light emission element may be configured as one package that generates green light, blue light, as well as the red light. In another example, the light source 131 may include individual red light emission element, green light emission element, and blue light emission element.

The light emission element may be formed as a light emitting diode (LED) or an LED chip, and be mounted on the printed circuit board 144. In addition, the light emission element may be formed as a side-view LED to emit light from the side of the case 120, and be mounted on the printed circuit board 144. The aspects of the present disclosure are not limited thereto, such that the light emitting unit 130 may be configured to emit different-colored light other than the above exemplary colored- light.

The light transmitting member 132 is arranged to encircle the side portion of the case 120. The light transmitting member 132 is formed of light transmitting material. The light transmitting member 132 may have an end exposed to the outside along the side edge of the case 120 and emit light from the exposed end. The light transmitting member 132 may protrude outwardly from the side of the case 120, thereby increasing recognition thereof when emitting light. The light transmitting member 132 may be formed as a closed loop, such as a rectangular ring. In this case, the light transmitting member 132 may have rounded corners. The light transmitting member 132 may be circle or oval in cross section.

The light transmitting member 132 receives light generated from the light source 131 and emits the received light to the outside from the side portion of the case 120. The light transmitting member 132 may be formed to have the light source 131 inserted therein. In this case, a portion of the light transmitting member 132 through which the light source 131 is inserted may be formed to be larger than the other portion.

The light transmitting member 132 may be configured to evenly emit the light over the whole surface thereof when receiving the light through a part thereof from the light source 131. Accordingly, when receiving the light from the light source 131, the light transmitting member 132 may form a rectangular ring-shaped light emission band, which draws more attention.

The driving unit 140 is accommodated in the case 120 to drive the display unit 110 and the light emitting unit 130. For example, the driving unit 140 may include a communication unit 141, the tag controller 142, and a battery 143.

The communication unit 141 receives the merchandise information through communication with a management server. The merchandise information includes information related to displayed content of the display unit 110 and information regarding the light emission control of the light emitting unit 130. The communication unit 141 may communicate with the management server via the relay of a gateway. The communication unit 141 may be configured to perform near field wireless communication schemes, for example, ZigBee characterized in low power consumption.

The tag controller 142 controls the display unit 110 in response to a merchandise information signal received from the communication unit 141 to display the merchandise information on the screen 111 of the display unit 110. Accordingly, in response to the merchandise information transmitted from the management server to the tag controller 142 through the communication unit 141, the screen 111 of the display unit 110 reflects and displays the merchandise information in real time under the control of the tag controller 142.

The tag controller 142 controls light emission of the light emitting unit 130 in response to a light emission control signal transmitted from the communication unit 141. For example, in response to receiving a light-on signal, the tag controller 142 controls the light emitting unit 130 to remain lit until a light-off signal is received. In response to repeatedly receiving a light-on signal and a light-off signal at a predefined interval, the tag controller 142 lights the light emitting unit 130 on and off at the predefined interval. Thus, it may be possible to provide additional information to the customers by lighting the light emitting unit 130 on or off at the time of change in merchandise information or at a specific time period.

In a case where the light emitting unit 130 is configured to emit red light, green light, and blue light, a color change control signal may be transmitted from the management server to the communication unit 141. When the color change control signal is received through the communication unit 141, the tag controller 142 controls the change of light color of the light emitting unit 130 according to the received color change control signal.

For example, the tag controller 142 may emit the red light, green light, and blue light alternately, or combine the red, green, and blue lights to a determined color and emits the resultant color light. Hence, it may be possible for the customers to easily recognize additional merchandise information, for example, information about a discount rate, special item or the like, from a distance by varying the color of emitted light according to the merchandise information. The tag controller 142 may be mounted on the printed circuit board 144 along with the communication unit 141.

The battery 143 supplies power to the tag controller 142. The battery 143 is electrically connected to the tag controller 142. The battery 143 may be formed as a rechargeable battery that can be recharged in a wired and/or wireless manner. In another example, the battery 143 may be formed as a primary battery.

The case 120 may include a front case 121 and a rear case 122. The front case 121 is formed to expose the screen 111 of the display unit 110 from the front of the display unit 110. The front case 121 may be formed of a transparent material to be visible from the outside through the front case 121. In this case, the bezel unit 113 may be visible from the outside through the front case 121. The front case 121 may have a transparent portion corresponding to the location of the screen 111 of the display unit 110. Although not illustrated, a front surface of the front case 121 may have a central rectangular opening through which to expose the screen 111 to the outside.

The rear case 122 is coupled to the rear of the front case 121 and the driving unit 140 is situated between the rear case 122 and the front case 121. The rear case 122 has an inner space in a hexahedron-like shape with an open front surface. The rear case 122 and the front case 121 may form a space therebetween, and the display unit 110 and the driving unit 140 are situated in this space.

The front case 121 and the rear case 122 may be coupled to each other in the following structure. The rear case 122 may have a catching step 122a that is bent inwardly along the frontal edge of the rear case 122. The front case 121 has a hook portion 121a on the rear surface thereof at which the catching step 122a is hooked. The hook portion 121a is of a rectangular shape with a portion partially open. The display unit 110 is disposed within the inner space defined by the hook portion 121a. A portion of the transparent member 132 through which the light source 131 is inserted is disposed corresponding to a location of the open part of the hook portion 121a.

Accordingly, when the user presses the front case 121 toward the rear case 122 with the light transmitting member 132 interposed between the front case 121 and the rear case 122, the hook portion 121a is caught on the catching step 122a so that it is possible to easily couple the front case 121 to the rear case 122. In another example, the front case 121 may be engaged to the rear case 122 via an engagement member, such as a bolt, and the like.

The light transmitting member 132 may be mounted on a coupled area between the front case 121 and the rear case 122 and be hermetically sealed. The light transmitting member 132 may be made of a material of elasticity as well as light transmittance and capable of forming a hermetic seal. The material may be, for example, silicon. Accordingly, the light transmitting member 132 may enable the case to be waterproof and dustproof, and thus can additionally obtain waterproof and dustproof performances.

The electronic information label tag 100 should be able to be placed in a low-temperature environment, such as a frozen section, or in a humid environment, such as a fresh section. In the case of the display unit 110 formed of electronic paper, the electronic paper may have difficulties in normal operation in such a low-temperature or humid environment, due to the nature of its physical properties. If the coupled area between the front case 121 and the rear case 122 is made waterproof by the light transmitting member 132, moisture penetration to the electronic paper is prevented and thus normal operation is feasible. In addition, lighting of the light transmitting member 132 may encourage the purchase of the product.

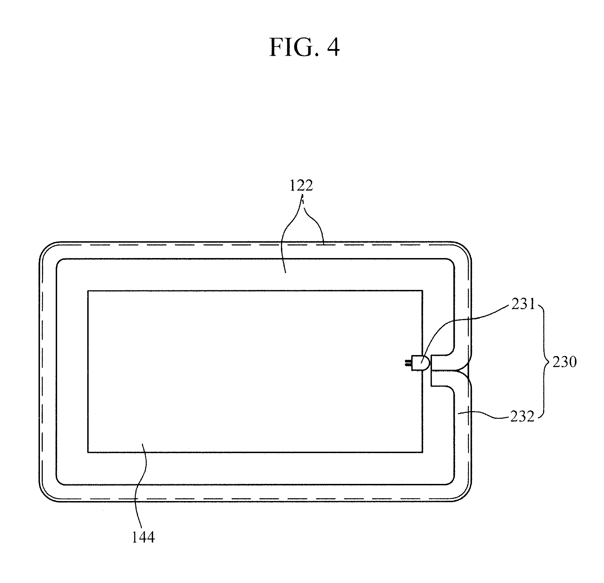

FIG. 4 is a diagram illustrating an interior of an electronic information label tag to which another example of a light emitting unit is applied.

Referring to FIG. 4, in a light emitting unit 230, a light transmitting member 232 with an internal portion having a refractive index higher than that of an external portion may provide an optical waveguide function. Accordingly, the light transmitting member 232 may allow incoming light to be totally reflected and pass therethrough, so that the light can be emitted through the side of the light transmitting member 232. The light transmitting member 232 may be formed by a plastic optical fiber.

The light transmitting member 232, which is formed by an optical fiber, has a structure in which a core thereof surrounded by a cladding has a higher refractive index than that of the cladding. To allow light from the light source 231 to smoothly enter the core, the light transmitting member 232 may be constructed to have both end sides connected to each other while both ends thereof are exposed to the light source 231. The light source 231 may be configured to emit light to one of two ends of the light emitting member 232.

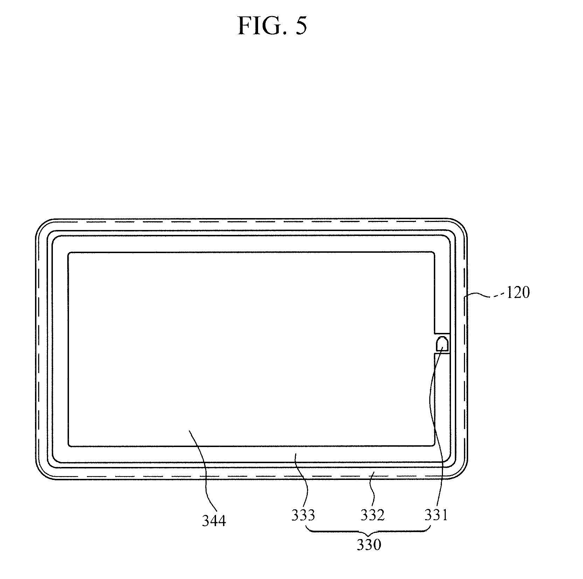

FIG. 5 is a diagram illustrating an interior of an electronic information label tag to which another example of a light emitting unit is applied.

Referring to FIG. 5, a light emitting unit 330 further includes a light guiding unit 333. The light guiding unit 333 within a case 120 uniformly transmits light generated from a light source 331 to a light transmitting member 332. In this case, the light source 331 and the light transmitting member 332 may be configured in the same or similar manner as the light source 131 and the light transmitting member 132 described above. However, since the light emitting unit 330 includes the light guiding unit 333, the light transmitting unit 332 does not need to have a light guiding function.

For example, the light guiding unit 333 may be accommodated within the case 120 while facing an internal side of the light transmitting member 332. In this case, the light guiding unit 333 may be shaped as a rectangular ring that is smaller than the light transmitting member 332. The light guiding unit 333 is of rectangular longitudinal section, and has all rounded corners. The light guiding unit 333 may have one portion cut away to have a light source 331 inserted therethrough, and receive light from the light source 331.

In a case where the case 120 is formed by a front case 121 and a rear case 122 coupled to each other as described above, the coupled portion between the front case 121 and the rear case 122 is partially open, such that light can be transmitted from the light guiding unit 333 to the light transmitting member 332. The light guiding unit 333 may be supported on a printed circuit board 344. The light guiding unit 333 may be made of an acrylic material, or the like. The light guiding unit 333 may have a reflective layer on the rear of a surface facing the light transmitting member 332 to uniformly guide light to the light transmitting member 332.

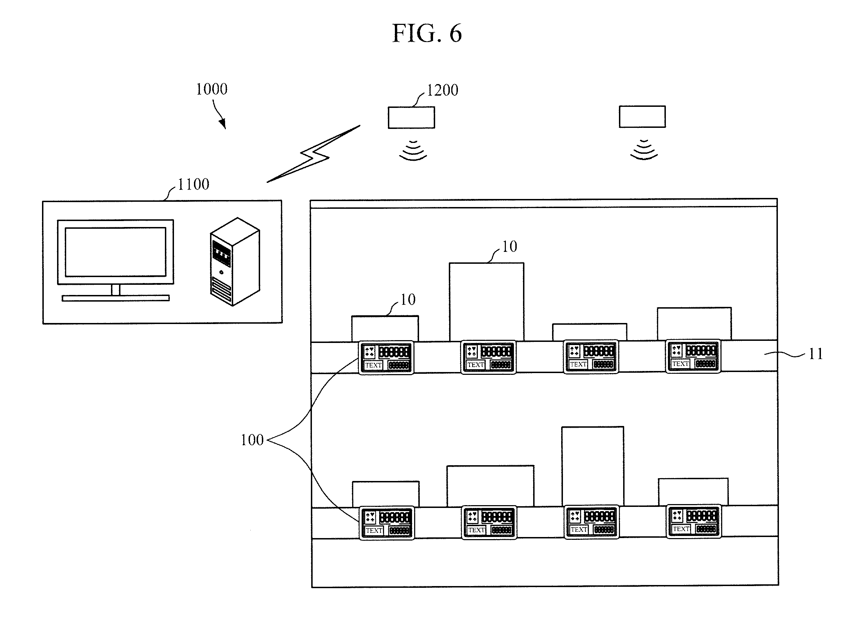

FIG. 6 is a diagram illustrating a configuration of an electronic information label management system according to an exemplary embodiment.

Referring to FIG. 6, an electronic information label management system 1000 includes a plurality of electronic information label tags 100 and a management server 1100. The configuration of each electronic information label tag 100 is the same as the example described above. The electronic information label tags 100 are adhered to a shelf 11 on which merchandise items 10 are displayed. The electronic information label tags 100 are disposed to correspond to the respective merchandise items 10.

The management server 1100 may transmit merchandise information to each of the electronic information label tags 100 to control the content to be displayed by the display units 110 and the light emission of the light emitting unit 130, 230, or 330. In this case, the merchandise information may contain the information about the content to be displayed by the display unit 110 and the information about the light control of the light emitting unit 1230, 230, or 330.

The management server 1100 transmits a merchandise information signal related to the content to be displayed on the display unit 110 to the driving unit 140 of each electronic information label tag 100 via the relay of a gateway 1200, and controls the merchandise information to be displayed on each display unit 110 of the electronic information label tag 100 in response to the transmitted merchandise information signal.

Further, the management server 1100 may transmit a light emission control signal that corresponds to each of the electronic information label tags 100 to each driving unit 140 of the electronic information label tags 100 through a relay of gateway 1200 to control the light emission of the electronic information label tag 100 in response to the transmitted light emission control signal.

In a case where each of the electronic information label tags 100 is configured to have light emitting units 130, 230, and 330, each of which emits red light, green light, and blue light, the management server 1100 may transmit a color change control signal to each of the driving units 140 of the electronic information label tags 100 via a relay of gateway 1200 to control the color change of each light emitting unit 130, 230, and 330 of the electronic information label tags 100 in response to the transmitted color change control signal.

The management server 1100 may include a database that stores data, including information about each merchandise item 10 corresponding to each electronic information label tag 100 and information for general management. The management server 1100 may communicate with the gateway 1200 using a wireless communication scheme, such as ZigBee. The gateway 1200 may receive tag information from the electronic information label tags 100 and transmit the received tag information to the management server 1100.

The management server 1100 may classify the electronic information label tags 100 into groups and transmit a light emission control signal to each driving unit 140 of the electronic information label tags 100 belonging to a selected group via a relay of the gateway 1200, so as to control the light emission of each light emitting unit 130, 230, and 330 of the selected electronic information label tags 100.

For example, it may be possible to select only the electronic information label tags 100 associated with merchandise on sale at the start of the discount sales, and then control the light emission or color change of each light emitting unit 130, 230, and 330 of the selected electronic information label tags 100. Hence, the easy and prompt purchase promotion for the merchandise items on sale can take place.

A number of examples have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. An electronic information label tag comprising:
a display unit configured to display merchandise information;
a case configured to accommodate the display unit while exposing a screen of the display unit to an outside;
a light emitting unit configured to emit light from a side portion of the case to the outside; and
a driving unit accommodated within the case and configured to drive the display unit and the light emitting unit.

2. The electronic information label tag of claim 1, wherein the light emitting unit comprises a light source mounted within the case and configured to generate light under a control of the driving unit, and a light transmitting member disposed to encircle the side portion of the case and configured to receive the light from the light source and emit the received light from the side portion of the case to the outside.

3. The electronic information label tag of claim 2, wherein the case comprises a front case formed to expose the screen of the display unit from a front of the display unit, and a rear case coupled to a rear of the front case to accommodate the driving unit within a space formed between the rear case and the front case.

4. The electronic information label tag of claim 3, wherein the light transmitting member is mounted on a coupled area between the front case and the rear case and made of a sealing material to hermitically seal the coupled area.

5. The electronic information label tag of claim 2, wherein the light emitting unit further comprises a light guiding unit mounted within the case and configured to uniformly transmit the light generated from the light source to the light transmitting member.

6. The electronic information label tag of claim 1, wherein the driving unit comprises:
a communication unit configured to receive merchandise information through communication with a management server;
a tag controller configured to display the merchandise information on the display unit according to the merchandise information received from the communication unit and control light emission of the light emitting unit; and
a battery configured to supply power to the tag controller.

7. An electronic information label management system comprising:
a plurality of electronic information label tags, each of which is adhered to a shelf on which merchandise items are displayed, and comprises a display unit configured to display merchandise information, a case configured to accommodate the display unit while exposing a screen of the display unit to an outside, a light emitting unit configured to emit light from a side portion of the case to the outside, and a driving unit accommodated within the case and configured to drive the display unit and the light emitting unit; and
a management server configured to transmit the merchandise information to each of the plurality of electronic information label tags to control content to be displayed on the display unit of each electronic information label tag and light emission of the light emitting unit of each electronic information label tag.

8. The electronic information label management system of claim 7, wherein the management server classifies the electronic information label tags into groups and transmits a light emission control signal to each driving unit of the electronic information label tags belonging to a selected group, so as to control light emission of each light emitting unit of the selected electronic information label tags.

9. The electronic information label management system of claim 7, wherein the light emitting unit is configured to emit red light, green light, and blue light.

10. The electronic information label management system of claim 9, wherein the management server transmits a color change control signal to each driving unit of the electronic information label tags and controls change of light color of each light emitting unit of the electronic information label tags according to the received color change control signal.

11. The electronic information label management system of claim 7, wherein each light emitting unit comprises a light source mounted within the case and configured to generate light under a control of the driving unit, and a light transmitting member disposed to encircle the side portion of the case and configured to receive the light from the light source and emit the received light from the side portion of the case to the outside.

12. The electronic information label management system of claim 11, wherein the case comprises a front case formed to expose the screen of the display unit from a front of the display unit, and a rear case coupled to a rear of the front case to accommodate the driving unit within a space formed between the rear case and the front case.

13. The electronic information label management system of claim 12, wherein the light transmitting member is mounted on a coupled area between the front case and the rear case and made of a sealing material to hermitically seal the coupled area.

14. The electronic information label management system of claim 11, wherein the light emitting unit further comprises a light guiding unit mounted within the case and configured to uniformly transmit the light generated from the light source to the light transmitting member.

15. The electronic information label management system of claim 7, wherein the driving unit comprises:
a communication unit configured to receive the merchandise information through communication with the management server;
a tag controller configured to display the merchandise information on the display unit according to the merchandise information received from the communication unit and control light emission of the light emitting unit; and
a battery configured to supply power to the tag controller.
